Europäisches Patentamt

European Patent Office

Office européen des brevets

(11) Numéro de publication: **0 298 837**
**A1**

# (12) DEMANDE DE BREVET EUROPEEN

(21) Numéro de dépôt: **88401683.3**

(22) Date de dépôt: **30.06.88**

(51) Int. Cl.⁴: **G 06 K 11/06**
G 06 F 1/00, H 04 N 5/65

(30) Priorité: **02.07.87 FR 8709384**
**02.07.87 FR 8709385**

(43) Date de publication de la demande:
**11.01.89 Bulletin 89/02**

(84) Etats contractants désignés:
**AT BE CH DE ES GB GR IT LI LU NL SE**

(71) Demandeur: **PHOTONETICS**
**52 Avenue de l'Europe**
**F-78160 Marly le Roi (FR)**

(72) Inventeur: **Arditty, Hervé**
**27 Avenue de l'Abreuvoir**
**F-78160 Marly le Roi (FR)**

**Graindorge, Philippe**
**2 Square des Genêts**
**F-78470 Magny les Hameaux (FR)**

**Le Boudec, Gilles**
**14 rue du Viel Abreuvoir**
**F-78100 Saint Germain en Laye (FR)**

(74) Mandataire: **Thibon-Littaye, Annick**
**Cabinet A. THIBON-LITTAYE 11 rue de l'Etang**
**F-78160 Marly-le-Roi (FR)**

(54) **Dispositif de montage d'écran tactile de type optique.**

㉘ L'invention concerne un dispositif de montage d'une plaque (1) guide d'ondes lumineuses d'un écran tactile de type optique, devant un tube CRT (8), ledit tube étant disposé dans un châssis de moniteur (10). Il comporte en outre au moins un profilé (5) à section en forme de "U" fermé, enserrant comme une pince une zone de pourtour de la plaque et maintenant ladite plaque (1) à distance dudit tube CRT (8), ledit profilé à section en "U" (5) présentant une embase prolongée par deux montants (15,25) dont les extrémités refermées (5A,5B) par rapport à l'embase forment des arêtes d'appui uniques dudit profilé sur ladite plaque, pratiquement sans contact optique avec elle.

FIG.1

EP 0 298 837 A1

**Description**

## DISPOSITIF DE MONTAGE D'UNE PLAQUE D'ECRAN TACTILE DE TYPE OPTIQUE

L'invention concerne le domaine de la transmission d'informations sur écran et plus particulièrement un dispositif de montage d'une plaque d'écran tactile de type optique devant un tube cathodique.

On a vu se développer ces dernières années des écrans tactiles conçus pour s'affranchir de l'utilisation d'un clavier de machine à écrire lorsque l'on désire entrer ou sélectionner des informations visualisées sur un écran. Pour répondre à une question et indiquer un choix sur un menu, l'utilisateur d'un écran tactile n'a qu'à pointer un endroit spécifique devant l'écran du tube cathodique.

Un tel ensemble à écran tactile comporte un tube CRT, balayant répétitivement l'écran par un pinceau lumineux et monté dans un châssis de moniteur. Dans le cas d'un écran tactile de type optique, une plaque d'écran transparente est disposée devant ce tube de manière à se laisser traverser par l'intensité lumineuse en absence de pointage sur l'écran, mais également à recoupler dans la plaque qui forme alors un guide d'ondes, la lumière frappant un objet pointeur en contact avec une partie de l'écran, pour conduire cette lumière vers la tranche de ladite plaque d'écran où se trouvent des moyens photodétecteurs sensibles à ladite lumière recouplée.

La lumière délivrée par le tube cathodique subit une légère déviation lorsqu'elle pénètre dans la plaque d'écran et une autre légère déviation lorsqu'elle en ressort. A l'exception des bruits de fond résultant d'une faible réflexion du rayonnement lors d'un passage dans la plaque d'écran, aucune lumière n'atteignant la tranche, elle n'est donc pas détectée par les moyens photodétecteurs situés localement sur cette tranche. Lorsqu'un objet pointeur tel qu'un doigt ou un stylet vient en contact avec un point de la plaque d'écran, cet objet reçoit des rayons lumineux provenant du tube cathodique. Une réflexion dans la plaque d'écran se produit alors, impliquant une capture des rayons au sein de la plaque qui se trouvent guidés par elle sans autre atténuation que l'absorption de la matière jusqu'à atteindre un des bords de cette plaque.

Les photodétecteurs situés sur cette tranche permettent de détecter de tels rayons. Ils délivrent des signaux envoyés sur des moyens de traitement qui permettent de connaître la position du point de contact par référence à la séquence de balayage du tube cathodique.

De manière à permettre une analyse correcte des rayons recouplés dans la plaque d'écran en présence d'un pointage, il est indispensable que la zone proche de la tranche de la plaque ne soit soumise à aucun rayonnement direct, soit de la part du tube CRT, soit d'un rayonnement extérieur. On doit éviter que des rayons ne viennent frapper les photodétecteurs et introduisent ainsi des informations qui ne soient pas liées à la position de l'objet sur l'écran, entraînant des facteurs gênants qui faussent la détection ainsi que la reconnaissance du point de contact.

Il avait été prévu dans les techniques antérieures, notamment par le brevet américain 4 305 071 déposé au nom de Bell Telephone Laboratories, d'utiliser deux montants verticaux placés aux extrémités de la plaque et enserrant à la fois les photodétecteurs et l'extrémité de la plaque d'écran. Ces deux montants verticaux empêchent un rayonnement direct de faisceaux lumineux sur les photodétecteurs. Mais une telle disposition d'éléments de cache a l'inconvénient de nécessiter des moyens de support sur le moniteur qui ne sont pas appropriés à un montage aisé et qui n'apportent pas la solidité importante que demandent les exigences d'utilisation.

D'autre part, de tels dispositifs peuvent présenter des points de contact au niveau du support de la plaque qui constituent des zones d'entrée de rayonnements optiques.

La présente invention vise donc à pallier ces inconvénients en réalisant un dispositif de montage d'écran tactile optique dans lequel le cache des zones de pourtour de l'écran est réalisé de manière robuste impliquant une facilité de montage de la plaque écran ainsi qu'une fixation aisée sur le moniteur et limitant tous les points de contact pouvant créer des zones d'entrée optique.

La présente invention a pour objet un dispositif de montage d'une plaque guide d'ondes lumineuses d'un écran tactile de type optique, devant un tube CRT, ledit tube étant disposé dans un châssis de moniteur, caractérisé en ce qu'il comporte au moins un profilé à section en forme de "U" renflé, enserrant comme une pince une zone de pourtour de la plaque et maintenant ladite plaque à distance dudit tube CRT, ledit profilé à section en "U" présentant une embase prolongée par deux montants dont les extrémités refermées par rapport à l'embase forment des arêtes d'appui uniques dudit profilé sur ladite plaque, qui sont pratiquement sans contact optique avec elle.

Par l'utilisation de ce profilé creux venant enserrer la plaque d'écran au niveau de deux points optiquement non réfléchissants, on obtient une protection de toute la zone proche des photodétecteurs, totalement isolée de rayonnement provenant du tube cathodique ou de toute source de lumière extérieure. Par des moyens de support appropriés, on permet un montage aisé du profilé enserrant la plaque sur le moniteur.

Avantageusement le profilé comporte des moyens de support du profilé enserrant la plaque au niveau de ladite zone de pourtour sur une pièce d'habillage avant du moniteur, ladite pièce étant solidarisable du châssis du moniteur.

Selon une caractéristique secondaire de l'invention, la pièce d'habillage avant recouvre le profilé jusqu'au niveau desdites arêtes d'appui sur la plaque de manière à présenter à l'utilisateur une zone centrale d'écran sensitive à l'objet pointeur. La forme de la pièce d'habillage avant permet donc de laisser à la vue de l'utilisateur la zone active de la plaque d'écran sur laquelle il pourra délivrer une information qui sera analysée ensuite.

Selon un premier mode de réalisation des moyens de support du profilé enserrant le pourtour de la plaque, un premier montant du profilé vient en contact avec la pièce d'habillage avant du moniteur et un second montant en contact avec le tube CRT réalisant un espacement continu entre la plaque d'écran et le tube CRT.

Selon un deuxième mode de réalisation des moyens de support, des pattes de fixation sont disposées sur l'extrémité non ouverte du profilé coopérant par des moyens de fixation avec la pièce d'habillage avant du moniteur.

Selon une autre caractéristique secondaire de l'invention, la zone pourtour de la plaque d'écran insérrée dans le profilé est recouverte d'un cache en velours noir, le profilé agissant en prise par ses extrémités par l'intermédiaire du cache en velours noir de manière à réaliser un contact mécanique sans action optique sur l'écran. L'utilisation du velours permet de s'affranchir des influences que peuvent avoir les fixations de la plaque sur le cadre pouvant impliquer une absorption de la lumière guidée par la plaque. Le velours noir réalise des points de contact non réfléchissants qui ne sont pas susceptibles d'établir avec la plaque un contact optique.

Selon un autre mode de réalisation on s'affranchit des problèmes de contact du profilé sur la plaque en disposant sur les arêtes d'appui du profilé en "U" un coussinet longitudinal de velours noir constituant des points de maintien optiquement non réfléchissants de la plaque d'écran.

Selon un mode de réalisation secondaire de l'invention l'écran est de forme générale polygonale présentant au moins trois angles, limitée par une tranche contre laquelle sont disposés localement lesdits photodétecteurs, au moins un photodétecteur étant disposé à chacun des angles de la forme polygonale orientée contre la tranche selon la bissectrice aux côtés d'un angle considéré, les champs de détection desdits photodétecteurs se chevauchant de manière à couvrir en détection toute la zone centrale de plaque d'écran.

Avantageusement la plaque présente une forme générale rectangulaire comportant des pans coupés aux angles de ladite forme rectangulaire, au moins quatre photodétecteurs étant disposés sur la tranche au niveau desdits pans coupés.

On décrira maintenant plus en détail une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés, dans lesquels :

- la figure 1 représente une coupe du dispositif de montage de l'écran tactile ;

- la figure 2 représente une vue de face de la plaque d'écran revêtue de la pièce d'habillage avant ;

- la figure 3 représente un second mode de réalisation du support de la plaque ;

- la figure 4 représente les champs de détection des photodétecteurs sur la plaque d'écran.

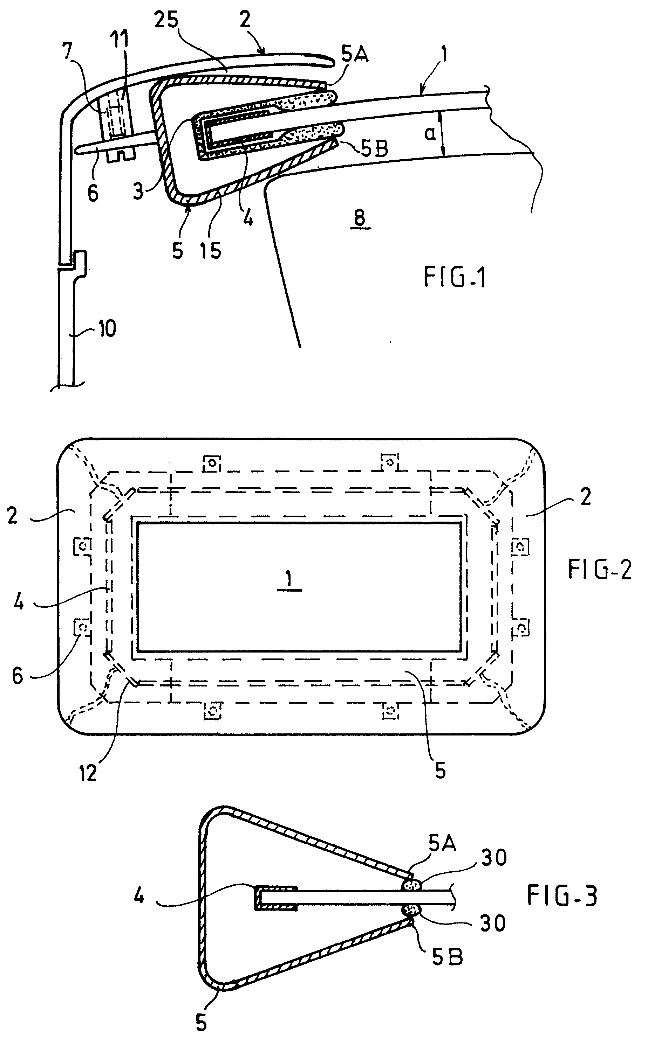

Comme représenté à la figure 1, une plaque d'écran 1, formant guide d'ondes lumineuses est placée à proximité d'un tube CRT 8. Les rayons lumineux issus de ce tube CRT, à un instant donné, dans une direction donnée, traversent cette plaque d'écran 1 sans altération notable. La plaque d'écran 1 est utilisée de manière à pouvoir servir d'indicateur de position d'un objet pointeur en contact avec une zone particulière de cet écran, symbolisant par exemple un choix à une question ou à une sélection entre plusieurs éléments dans un menu. Le positionnement de l'objet pointeur tel qu'un doigt ou un stylet implique un blocage des rayons issus du tube CRT, ces rayons étant recouplés dans la plaque d'écran qui joue alors le rôle d'un guide d'onde conduisant la lumière vers la tranche de cette plaque. Cette plaque est pourvue sur sa tranche, à des positions bien précises qui seront explicitées ultérieurement, de photodétecteurs 12 qui analysent, par les rayons recouplés dans la plaque, la position pointée de l'objet sur cette plaque.

Le tube CRT 8 est encastré dans un châssis de moniteur 10. La zone de pourtour de la plaque d'écran est maintenue par un profilé 5 à section en forme de "U" renflé. Ce profilé, en quatre tronçons encadrant le pourtour rectangulaire de l'écran, enserre, par ses deux extrémités 5A,5B formant des arêtes d'appui légèrement resserrées par rapport à l'embase de la section en "U", la plaque d'écran largement incorporée dans une cavité creuse laissée libre entre le profilé et l'écran. Par la forme particulière de ce profilé 5, la zone de pourtour de la plaque d'écran 1 est protégée de tout rayonnement extérieur venant du tube CRT 8 ou venant de tout autre source lumineuse. Cette protection est nécessaire afin d'éviter un rayonnement direct sur les photodétecteurs qui constituerait des informations lumineuses parasites étrangères aux rayons lumineux provenant du recouplage par l'objet pointeur. La protection lumineuse de ces photodétecteurs est réalisée par la cavité du profilé. Cependant, afin de permettre un bon fonctionnement, les points de contact de ce profilé doivent être pratiquement optiquement non actifs pour éviter toute introduction de rayonnement lumineux qui viendrait annihiler les protections réalisées sur toute la zone de pourtour.

Pour réaliser des points de support optiquement non actifs, dans un premier mode de réalisation, présenté à la figure 1, la zone de pourtour est recouverte sur ses deux faces et sur la tranche par une bande de velours 3 constituant un matériau non réfléchissant qui n'est pas susceptible d'établir avec la plaque un contact optique. Le velours, de par sa constitution et de par son tissage, réalise une succession de fibres textiles distantes les unes des autres de manière à présenter des contacts pratiquement ponctuels sur la surface du tissu. On comprendra aisément que tout autre matériau bénéficiant des mêmes propriétés de contacts ponctuels sur sa surface conviendrait dans l'utilisation de la présente invention. Les deux extrémités ouvertes du profilé 5A et 5B formant des arêtes d'appui viennent prendre en pince la plaque par l'intermédiaire de ce cache de velours noir 3, réalisant ainsi, d'une part un volume intérieur absent de tout rayonnement direct pouvant gêner les détections des photodétecteurs et d'autre part des points de support optiquement non actifs.

Selon un deuxième mode de réalisation présenté à la figure 3, les deux extrémités 5A et 5B du profilé creux sont pourvues d'un coussinet longitudinal de velours noir 30 constituant des points de maintien optiquement non réfléchissants de la plaque d'écran. La zone de pourtour de la plaque d'écran insérée dans la cavité du profilé 5 est munie d'une couche réflectrice 4 sur sa tranche et sur une partie de ses surfaces supérieures et inférieures de manière à renvoyer dans la plaque d'écran les rayons qui parviendraient à la tranche de la plaque dans les zones du pourtour de l'écran où elle n'est pas directement en regard des détecteurs 12. Cette couche réflectrice 4 est bien entendu interrompue au niveau de chacun des photodétecteurs. Son utilisation permet d'augmenter sensiblement l'efficacité de collection des photodétecteurs. On pourra également obtenir une amélioration de la collection des rayons recouplés par l'usinage de la tranche en biseau sur les parties non directement en regard des détecteurs.

On remarquera que dans le cas des figures 1 et 2, la même couche réflectrice 4 recouvre la tranche de la plaque sous le cache de velours sur toute la longueur des profilés 5 et que dans tous les cas, la forme renflée donnée au profilé fait qu'en tout point hors des arêtes d'appui pinçant la plaque d'écran, il est maintenu nettement espacé de celle-ci ou de son velours, sans risque de contact avec elle.

Le profilé 5 à section en forme de "U" vise également à maintenir l'ensemble sur le châssis. Pour cela, il comporte des moyens de support de l'ensemble profilé-plaque sur une pièce d'habillage avant 2 du moniteur.

Selon un premier mode de réalisation, les moyens de support sont constitués par la forme même du profilé. En effet, la plaque étant enserrée par les deux extrémités 5A et 5B venant en prise de pince, l'ensemble profilé-plaque repose, par l'intermédiaire du montant 15 du profilé, sur le tube CRT. La forme légèrement repliée vers l'intérieur assure un espacement continu a de la plaque 1 par rapport au tube CRT 8. Par le contact de ce montant 15 du profilé sur le tube, on assure le support et l'espacement de l'écran. On vient ensuite positionner la pièce d'habillage avant 2 en contact avec le montant 25 du profilé. Cette pièce d'habillage avant 2 du profilé recouvre ledit profilé jusqu'au niveau des extrémités 5A,5B afin de laisser à la vue et au toucher de l'utilisateur une zone centrale sensitive qui sera ensuite exploitée. Dans ce premier mode de réalisation le dispositif de support est constitué par la forme même du profilé et par les points de contact, d'une part sur le tube, et d'autre part sur la pièce d'habillage avant.

Selon un second mode de réalisation, le dispositif de support comporte une patte de fixation 6 disposée sur l'extrémité non ouverte du profilé. Cette patte de fixation est munie d'un orifice dans lequel viennent se placer des moyens de fixation tels qu'une vis 7 pénétrant dans des tétons 11. Le montage dans ce cas est très simple, on place le profilé en "U" sur tout le pourtour de la plaque d'écran, ensuite il suffit de venir introduire les vis dans les orifices des pattes de fixation et de réaliser la fixation sur les tétons 11 ménagés dans la pièce d'habillage avant 2. Puis on vient placer l'ensemble sur le châssis du moniteur en assurant un blocage de l'ensemble par des moyens connus en soi.

Il convient de préciser que les deux moyens de support décrits précédemment peuvent être utilisés en combinaison tel que montré dans la figure 1.

La figure 2 représente une vue de face de l'ensemble. La plaque 1 est donc enserrée sur tout son pourtour par un profilé 5. De manière à faciliter la mise en place de ce profilé, celui-ci se décompose en quatre pièces que l'on distingue sur la figure, chacune munie de deux pattes de fixation : une pièce supérieure, une pièce inférieure ainsi que deux pièces latérales réalisant, lorsqu'elles sont en position, une succession continue de profilés, évitant tout contact extérieur d'une source lumineuse sur les photodétecteurs.

Afin de s'assurer que l'objet pointeur soit pris en compte à l'intérieur d'un champ de détection d'un photodétecteur bénéficiant d'une sensibilité suffisante pour un traitement de l'information, il est utile de prévoir un positionnement précis des photodétecteurs pour couvrir en détection la majeure partie de la plaque d'écran et essentiellement la partie centrale.

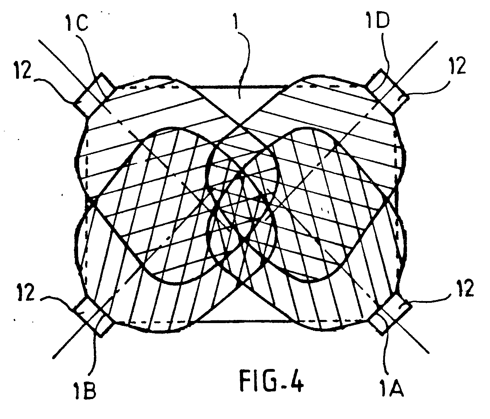

La figure 4 présente la position des photodétecteurs sur une plaque d'écran rectangulaire. Chacun des quatre photodétecteurs est disposé à un coin de la forme rectangulaire et la zone sensible de chacun des photodétecteurs est placée selon une direction normale à la bissectrice aux deux côtés du coin de la forme considérée.

Afin de permettre ce positionnement selon la normale à la bissectrice, les coins de la forme rectangulaire sont écornés de manière à présenter des pans coupés 1A, 1B, 1C, 1D et assurer ainsi une disposition selon cette direction. De ce fait, l'axe des champs de détection coïncide avec les bissectrices de la forme considérée.

Le champ de détection de chacun des photodétecteurs chevauche alors le champ de détection du photodétecteur situé symétriquement par rapport à l'axe médian, permettant de réaliser une zone de détection exempte de toute zone morte. On obtient par une telle disposition une détection d'objets pointeurs le long de la plaque d'écran et notamment sur toute la partie centrale.

La disposition sur les pans coupés de chacun des coins assure un chevauchement parfait éliminant toute zone morte, mais sans pour autant étendre les champs de détection en dehors de la plaque d'écran. Si, lors d'une application particulière à la présente invention, la plaque d'écran possède une surface très importante, le positionnement des photodétecteurs aux quatre coins munis de pans coupés peut se révéler insuffisant. On placera alors une série de quatre nouveaux photodétecteurs selon les médianes à la forme de la plaque d'écran, ce qui permet d'englober les zones non couvertes par un champ de détection, sans pour autant obtenir une disposition qui entraînerait un débordement d'un champ de détection en dehors de la plaque d'écran.

Dans un tel cas, on se contentera de monter les photodétecteurs supplémentaires sur les lignes droites d'un écran rectangulaire, mais il peut aussi être souhaitable de modifier la forme de la plaque d'écran afin de la transformer en une forme polygonale présentant autant d'angles à pans coupés qu'il y a de détecteurs, soit par exemple une forme hexagonale pour six détecteurs ou une forme octogonale pour huit détecteurs. Tous les détecteurs ajoutés peuvent se placer, selon cette nouvelle forme, sur un angle de polygone et dans une direction perpendiculaire à la bissectrice à l'angle considéré et coopérer ainsi à la forme polygonale de la même manière que les quatre premiers détecteurs d'une forme rectangulaire.

La présente invention permet d'obtenir comme on l'a expliqué, un dispositif de montage d'écran tactile de type optique évitant toutes interférences optiques créées par des points de contacts sur la plaque, ainsi qu'un montage aisé sur le châssis d'un moniteur. Mais, naturellement, elle n'est en rien limitée par les particularités qui ont été spécifiées dans ce qui précède ou par les détails des modes de réalisation particuliers choisis pour illustrer l'invention. Toutes sortes de variantes peuvent être apportées aux réalisations particulières qui ont été décrites à titre d'exemple et à leurs éléments constitutifs sans sortir pour autant du cadre de l'invention. Ces dernières englobent ainsi tous les moyens constituant des équivalents techniques des moyens décrits ainsi que leurs combinaisons.

## Revendications

1. Dispositif de montage d'une plaque (1) guide d'ondes lumineuses d'un écran tactile de type optique, devant un tube CRT (8), ledit tube étant disposé dans un châssis de moniteur (10), caractérisé en ce qu'il comporte au moins un profilé (5) à section en forme de "U" renflé, enserrant comme une pince une zone de pourtour de la plaque et maintenant ladite plaque à distance dudit tube CRT, ledit profilé à section en "U" (5) présentant une embase prolongée par deux montants (15,25) dont les extrémités refermées (5A,5B) par rapport à l'embase forment des arêtes d'appui uniques dudit profilé sur ladite plaque, qui sont pratiquement sans contact optique avec elle.

2. Dispositif de montage selon la revendication 1, caractérisé en ce que le profilé (5) comporte des moyens de support (6,15,25) du profilé enserrant la plaque au niveau de ladite zone de pourtour, sur une pièce d'habillage avant (2) du moniteur, ladite pièce étant solidarisable du châssis du moniteur (10).

3. Dispositif de montage selon la revendication 2, caractérisé en ce que la pièce d'habillage avant (2) recouvre le profilé (5) jusqu'au niveau desdites arêtes d'appui sur la plaque de manière à présenter à l'utilisateur une zone centrale d'écran sensitive à un objet pointeur.

4. Dispositif de montage selon les revendications 2 ou 3, caractérisé en ce que les moyens de support du profilé enserrant le pourtour de la plaque sont constitués par un premier montant (25) du profilé (5) venant en 30 contact avec la pièce d'habillage avant (2) du moniteur et par un second montant (15) en contact avec le tube CRT (8), réalisant un espacement continu (a) entre la plaque d'écran (1) et le tube CRT (8).

5. Dispositif de montage selon les revendications 2 ou 3, caractérisé en ce que les moyens de support du profilé enserrant le pourtour de la plaque sont constitués par des pattes de fixation (6) disposées sur l'embase de la section du profilé, lesdites pattes coopérant par des moyens de fixation (7) avec la pièce d'habillage avant (2) du moniteur.

6. Dispositif de montage selon l'une quelconque des revendications 1 à 5, caractérisé en ce que la zone pourtour de la plaque d'écran inserrée dans le profilé est recouverte d'un cache en velours noir (3), le profilé (5) agissant en prise par ses extrémités sur la plaque par l'intermédiaire du cache en velours noir (3) de manière à réaliser un contact mécanique sans action optique sur l'écran.

7. Dispositif de montage selon l'une quelconque des revendications 1 à 5, caractérisé en ce que les arêtes d'appui (5A,5B) du profilé sont pourvues d'un coussinet longitudinal (30) de velours noir constituant des points de maintien optiquement non réfléchissants de la plaque d'écran.

8. Dispositif de montage selon l'une quelconque des revendications 1 à 7, caractérisé en ce que la zone de pourtour de la plaque d'écran (1) est enserrée sur toute sa périphérie par une succession continue de profilés (5) à section en forme de "U".

9. Dispositif de montage selon l'une quelconque des revendications 1 à 8, caractérisé en ce que l'écran est de forme générale polygonale présentant au moins trois angles, limitée par une tranche contre laquelle sont disposés localement lesdits photodétecteurs, au moins un photodétecteur étant disposé à chacun des angles de la forme polygonale orientée contre la tranche selon la bissectrice aux côtés d'un angle considéré, les champs de détection desdits photodétecteurs se chevauchant de manière à couvrir en détection toute la zone centrale de plaque d'écran.

10. Dispositif de montage selon la revendication 9, caractérisé en ce que la plaque (1) présente une forme générale rectangulaire comportant des pans coupés (1A,1B,1C,1D) aux angles de ladite forme rectangulaire, au moins quatre photodétecteurs (12) étant disposés sur la tranche au niveau desdits pans coupés.

11. Dispositif de montage selon la revendication 10, caractérisé en ce que les pans coupés (1A,1B,1C,1D) sont réalisés selon un plan pratiquement perpendiculaire à la direction de la bissectrice de deux côtés d'un angle considéré.

0298837

FIG-1

FIG-2

FIG-3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 553 142  (STRAUSS)<br>* Résumé * <br>--- | 1-3 | G 06 K  11/06<br>G 06 F  1/00<br>H 04 N  5/65 |
| A | EP-A-0 141 729  (THOMSON-CSF)<br>* Résumé; page 7, lignes 17-28 * <br>--- | 1-3,6,7 | |
| A | US-A-3 146 305  (A.T. MONACO)<br>* Figure 4 * <br>--- | 1,5 | |
| A | US-A-3 084 217  (J.P. FIORE)<br>* Figures 1-4 * <br>--- | 1,5 | |
| A | FR-A-1 362 288  (PHILIPS)<br>* Figure 1 * <br>--- | 1,5 | |
| A | US-A-4 305 071  (BELL et al.)<br>* Figures 7-10; colonne 4, lignes 29-64 *<br>--- | 9-11 | |
| A | EP-A-0 196 187  (AMERICAN TELEPHONE AND TELEGRAPH)<br>* Figure 3; page 8, lignes 17-33 * <br>--- | 9-11 | |
| A | EP-A-0 196 186  (AMERICAN TELEPHONE AND TELEGRAPH)<br>* Résumé; figures 2,4; page 6, lignes 17-35 * <br>--- | 9-11 | DOMAINES TECHNIQUES RECHERCHES (Int. Cl.4)<br><br>G 06 K  11/06<br>G 06 F  1/00<br>H 04 N  5/65 |
| A | US-A-4 078 151  (McNEARY)<br>* Résumé; figure 4; colonne 3, ligne 64 - colonne 4, ligne 20 * <br>----- | 9-11 | |

**Le présent rapport a été établi pour toutes les revendications**

| Lieu de la recherche | Date d'achèvement de la recherche | Examinateur |
|---|---|---|
| LA HAYE | 17-10-1988 | CERVANTES J.P.J. |